# EUROPÄISCHE PATENTSCHRIFT

(11) **EP 0 736 943 B1**
(45) Veröffentlichungstag und Bekanntmachung des Hinweises auf die Patenterteilung: **05.08.1998**
(21) Anmeldenummer: 96105144.8
(22) Anmeldetag: 30.03.1996
(51) Int. Cl.: H02G 15/103, H01R 4/02

(54) **Vorrichtung zur Verbindung zweier Kabelenden**
Device for connecting two cable ends
Dispositif de connexion de deux extrémités de câble

(30) Priorität: 08.04.1995 DE 19513462
(43) Veröffentlichungstag der Anmeldung: 09.10.1996
(73) Patentinhaber: ABB PATENT GmbH, 68309 Mannheim (DE)
(72) Erfinder: Müller, Karl-Bernhard, Dr., 68723 Schwetzingen (DE); Lorenz, Dietmar, 68163 Mannheim (DE)
(74) Vertreter: Rupprecht, Klaus, Dipl.-Ing.

(56) Entgegenhaltungen:
- DE-A- 2 707 592
- DE-A- 4 310 125
- FR-A- 2 006 069
- FR-A- 2 311 436
- US-A- 2 077 737

## Beschreibung

Die Erfindung betrifft eine Vorrichtung nach dem Oberbegriff des Anspruchs 1 und ein Verfahren unter Anwendung der Vorrichtung entsprechend dem Oberbegriff des Anspruchs 12. Eine derartige Vorrichtung ist aus der FR-A-23 11 436 bekannt.

Vorrichtungen zur Verbindung von Kabelenden, wie sie insbesondere bei Hochspannungs-Kabelmuffen zur Anwendung kommen, sind generell so aufgebaut, daß die Adern der zu verbindenden Kabelenden achs- und durchmessergleich zugeführt werden müssen. Nun gibt es aber Kabel, wie z.B. VPE-Kabel, bei denen aus fertigungstechnischen Gründen der Leiter nicht ganz zentrisch zur Außenfläche des Kabelmantels liegt. Um nun die zur Verbindung erforderliche Zentrizität zu erlangen, müssen die Kabelenden einem Schälvorgang unterzogen werden. Bei ausgeprägter exzentrischer Lage des Leiters zur Kabelmantelaußenfläche kann zwischen dieser und der geschälten Kabelmantelfläche eine große Stufe entstehen, deren Höhe entlang des Kabelumfangs stark schwankt. In diesem Stufenbereich können Probleme beim Übergang auf die äußere Leitschicht des Kabels entstehen.

Aufgabe der Erfindung ist es, eine Vorrichtung nach dem Oberbegriff des Anspruchs 1 und ein Verfahren unter Anwendung der Vorrichtung nach Anspruch 12 zu schaffen, mit deren Hilfe es gelingt, die durch exzentrische Lage des Leiters zur äußeren Kabelmantelfläche entstehenden üblichen Probleme zu vermeiden.

Diese Aufgabe wird durch die in den Ansprüchen 1 und 12 gekennzeichneten Merkmale gelöst. Zweckmäßige Ausgestaltungen und Weiterbildungen des Erfindungsgegenstandes sind in den Unteransprüchen genannt.

Der mit der Erfindung erzielte entscheidende Fortschritt beruht darauf, daß auf eine exzentrische Lage des Leiters zur äußeren Kabelmantelfläche keine Rücksicht mehr genommen werden muß. Sofern noch ein Schälen der Kabelenden erforderlich ist, kann sich dieses darauf beschränken ggf. bestehende Unrundheiten des Kabelmantels auszugleichen, was ohne größeren Materialabtrag möglich ist. Es wird jedes der beiden Kabelenden, koaxial zu einem Kontaktrohr liegend, fixiert und die beiden Leiterenden weisen eine in dieser exzentrischen Lage ausgeführte, vorzugsweise durch Schweißen hergestellte, Verbindungsstelle auf. Weiterhin sind die Kontaktelemente so ausgebildet und angeordnet, daß sie eine elektrische und thermische Kontaktierung zwischen den Leiterenden und dem Kontaktrohr gewährleisten.

Es ist vorgesehen, daß zu den Kontaktelementen mindestens ein Kontaktstück gehört, das mindestens ein Leiterende vorzugsweise im Preßsitz umschließt und mit mindestens einem Klemmkontakt radial verschiebbar, aber elektrisch und thermisch leitend verbunden ist. Da der Klemmkontakt zum jeweiligen Leiterende einen ausreichenden Zwischenraum freiläßt, kann er radial soweit verschoben werden, bis er mit seiner Außenfläche an der Innenfläche des Kontaktrohrs anliegt, wobei eine mindestens in einem Teilbereich sichergestellte gleiche Krümmung der Berührungsflächen für eine gute Kontaktierung sorgt.

Eine Verbesserung dieser Anordnung wird dadurch erzielt, daß der Klemmkontakt aus mindestens zwei Ringsegmenten, vorzugsweise aus vier Ringsegmenten, besteht, deren Trennebenen axial zur Kabelachse verlaufen, und jedes der Ringsegmente mit einem Verbindungselement, vorzugsweise einer Zugschraube, am Kontaktrohr befestigt ist. Mit diesem Aufbau wird eine breitflächige Kontaktgabe und damit gute Wärmeleitung zwischen dem am Leiter anliegenden Kontaktstück und dem Kontaktrohr erreicht.

Die radiale Verschiebbarkeit des Klemmkontakts bei gleichzeitig guter Kontaktgabe wird dadurch gewährleistet, daß das mindestens eine Kontaktstück mittels Klemmschrauben und Klemmfedern an die Ringsegmente des Klemmkontakts gepreßt ist.

Die Kontaktierung des Leiters beidseitig der Verbindungsstelle ermöglicht die Anordnung des das erste Leiterende erfassenden ersten Kontaktstücks und des das zweite Leiterende erfassenden zweiten Kontaktstücks. Der Klemmkontakt ist dann vorteilhaft zwischen den beiden Kontaktstücken anzuordnen. Mit Hilfe der Klemmschrauben und Klemmfedern wird der Klemmkontakt so eingeklemmt, daß eine radiale Verschiebung seiner Ringsegmente durch Drehung der Zugschrauben möglich ist.

In weiterer Ausbildung der Kontaktstücke ist vorgesehen, daß der größte Außendurchmesser beider Kontaktstücke um mindestens soviel kleiner als der Innendurchmesser des Kontaktrohrs bemessen ist, daß sie sich an mögliche exzentrische Lagen der Leiterenden anpassen können.

Aus konstruktiven Gründen sind die Kontaktstücke nicht spiegelsymmetrisch gleich aufgebaut, sondern besitzen unterschiedliche Form und Länge. So ist das erste Kontaktstück entlang seiner Mantelfläche mit einer Ringnut versehen, die groß genug ist, um über sie das Einsetzen der Klemmschraube in eine zugehörige Klemmschraubenbohrung zu ermöglichen.

Zur Erleichterung ihrer späteren Montage sind die Kontaktstücke axial geteilt und besitzen zur besseren Kontaktierung der Leiterenden, entlang ihrer inneren Mantelfläche kontaktgebende Ringstege.

Weiterhin ist es zweckmäßig das erste Kontaktstück so zu gestalten, daß es mittig eine koaxiale, zylindrische Aussparung aufweist, die mit ihrer Öffnung zum zweiten Kontaktstück weist und eine Aufnahme der Verbindungsstelle erlaubt.

Zur Erleichterung der späteren Montage ist vorgesehen, daß das Kontaktrohr im Bereich seiner Mantelfläche Führungsnuten aufweist, die zur Fixierung von Kontaktlamellen dienen. Diese Kontaktlamellen sorgen dafür, daß das Kontaktrohr relativ leichtgängig in den Isolierkörper einsteckbar ist und eine vom Isolierkörper umschlossene metallische Hülse oder Elektrode zuverlässig kontaktiert.

Neben der erfindungsgemäßen Vorrichtung ist ein Verfahren vorgesehen, das zur Herstellung einer Kabelverbindung dient und bei dem die erfindungsgemäße Vorrichtung zur Anwendung kommt. Bei diesem Verfahren werden zunächst alle zur Vorrichtung gehörigen, unzerlegbaren und damit nach der Kabelverbindung nicht mehr einsetzbaren Teile in der für die Montage erforderlichen Reihenfolge auf die jeweiligen, entsprechend vorbereiteten Kabelenden aufgeschoben. Anschließend werden die beiden Kabelenden, ohne Rücksicht auf eine exzentrische Lage ihrer beiden abisolierten Leiterenden, zur jeweiligen äußeren Kabelmantelfläche, mit Hilfe einer Montagevorrichtung so ausgerichtet, daß ihre äußeren Kabelmantelflächen konzentrisch zu einer gemeinsamen Mittelachse zu liegen kommen. In dieser Stellung werden dann die beiden abisolierten Leiterenden miteinander verbunden, vorzugsweise verschweißt. Anschließend erfolgt die Gesamtmontage der Vorrichtung.

Ausführungsbeispiele der Erfindung sind in den Zeichnungen dargestellt und werden im folgenden näher beschrieben. Es zeigen:
- Fig. 1: einen Isolierkörper mit einer Elektrode zur Feldsteuerung, seitlich im Schnitt,
- Fig. 2: den Isolierkörper mit weiteren Teilen in einer Montagestellung auf ein Kabel aufgeschoben zum Aufbau einer Kabelmuffe,
- Fig. 3: eine in den Isolierkörper einzusetzende Kontakteinrichtung, seitlich im Schnitt,
- Fig. 4: ein zur Kontakteinrichtung gehöriges Kontaktrohr seitlich im Schnitt,
- Fig. 5: das Kontaktrohr in Frontsicht, im Schnitt, entlang der Schnittlinie A-B nach Fig.4,
- Fig. 6: ein zur Kontakteinrichtung gehöriger Klemmkontakt in Frontansicht,
- Fig. 7: der Klemmkontakt seitlich im Schnitt, entlang der Schnittlinie A-B in Fig.6,
- Fig. 8: ein zur Kontakteinrichtung gehöriges zweites Kontaktstück, in Frontansicht, teilweise im Schnitt,
- Fig. 9: eine Hälfte des teilbaren Kontaktstückes seitlich, teilweise im Schnitt, entlang der Schnittlinie A-B in Fig.8,
- Fig. 10: ein zur Kontakteinrichtung gehöriges erstes Kontaktstück, in Frontansicht,
- Fig. 11: eine Hälfte des teilbaren Kontaktstückes nach Fig.10 seitlich, teilweise im Schnitt, entlang der Schnittlinie C-D in Fig.10,
- Fig. 12: eine der Fig.10 entsprechende Frontansicht teilweise im Schnitt entlang der Schnittlinie C-D in Fig.11.

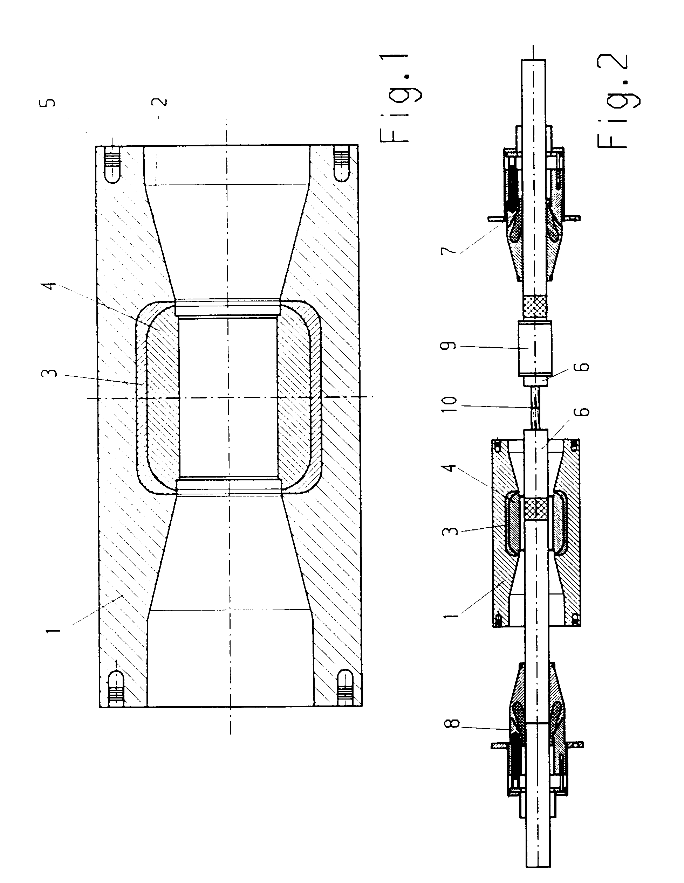

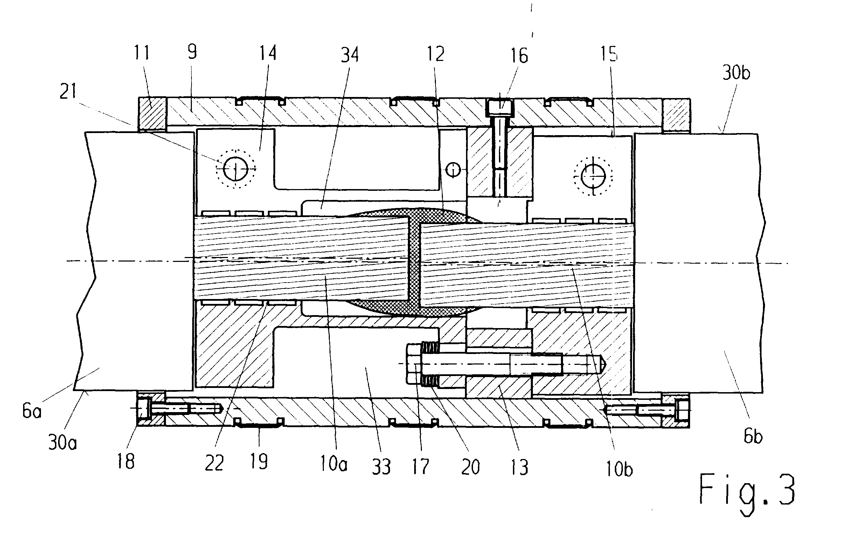

Ein in Fig.1 dargestellter Isolierkörper 1 dient zur Aufnahme einer in Fig.3 dargestellten Kontakteinrichtung und, wie Fig.2 zeigt, zur Aufnahme und Befestigung weiterer Bauteile einer Kabelmuffe. Der Isolierkörper 1 ist mittig mit einer Elektrode 3, 4 versehen, die zur Feldsteuerung dient und in den isolierenden Gießharzkörper mit eingegossen ist.

Damit es im Bereich der Grenzfläche zwischen der Elektrode und dem isolierenden Gießharzkörper bei hohen Temperaturen nicht durch unterschiedliche Dehnungskoeffizienten zu thermischen Spannungen und Ablöseerscheinungen kommen kann, besteht die Elektrode aus zwei Teilen unterschiedlichen Materials. Auf der Innenseite, der Kontakteinrichtung zugewandt, befindet sich ein Elektrodenkern 4 der aus Metall, vorzugsweise aus Aluminium besteht. Dieser ist in eine Steuerelektrode 3 aus leitfähigem Gießharz eingegossen, die den Elektrodenkern 4 zum isolierenden Gießharzkörper hin völlig abdeckt, so daß nur sie mit dem Elektrodenkern 4 eine gemeinsame Grenzfläche besitzt.

Da die Steuerelektrode 3 aus leitfähigem Gießharz besteht, kann sie in gleicher Weise wie eine Ganzmetallelektrode zur Feldsteuerung dienen. Bei Verwendung eines Gießharzes mit etwa gleichem Dehnungskoeffizienten bietet sie jedoch den Vorteil, daß zwischen ihr und dem isolierenden Gießharzkörper keine thermischen Spannungen auftreten können. Außerdem kann der Steuerelektrode 3 eine beliebige Kontur mit glatter Oberfläche gegeben werden, ohne daß es hierzu besonderer Arbeitsschritte bedarf und es wird eine optimale Oberflächenhaftung in der elektrischen Grenzschicht erreicht.

In der Grenzfläche zwischen dem Elektrodenkern 4 und der Steuerelektrode 3 kann es wegen des unterschiedlichen Materials zwar weiterhin zu einer thermomechanischen Beanspruchung kommen, doch führen mögliche Ablösungen des leitfähigen Gießharzes von der metallischen Oberfläche des Elektrodenkerns 4 wegen des gleichen elektrischen Potentials nicht zu elektrischen Entladungen. Außerdem wirkt sich im Sinne einer Verminderung der Grenzflächenbelastung positiv aus, daß das Volumen des Elektrodenkerns 4 im Verhältnis zur Gesamtelektrode wesentlich reduziert wurde und sich damit auch seine thermische Dehnung vermindert.

Wie Fig. 3 erkennen läßt, besitzt die Kontakteinrichtung ein Kontaktrohr 9, in dem noch weitere Kontaktelemente angeordnet sind. Diese dienen zur Kontaktierung abisolierter Leiterenden 10a,10b, die zu Kabelenden 6a,6b gehören und durch eine geschweißte Verbindungsstelle 12 miteinander verbunden sind. Ein erstes Kontaktstück 14 und ein zweites Kontaktstück 15 umfassen das ihnen jeweils zugeordnete Leiterende 10a,10b im Preßsitz, wobei Ringstege 22 durch entsprechend hohen Kontaktdruck für eine sichere Kontaktierung sorgen. Beide Kontaktstücke 14,15 sind axial halbiert und können deshalb auch noch nach erfolgter Schweißverbindung montiert werden. Verbindungsschrauben 21 sorgen für den Zusammenhalt der beiden Hälften der Kontaktstücke 14,15.

Um bei einer Erwärmung im Bereich der Verbindungsstelle 12 die von den Kontaktstücken 14,15 aufgenommene Wärme schnell an das Kontaktrohr 9 weiterleiten zu können, ist zwischen zwei Stirnseiten der Kontaktstücke 14,15 ein Klemmkontakt 13 eingeklemmt. Dieser Klemmkontakt 13 besteht aus vier Ringsegmenten 31, von denen jedes über eine Zugschraube 16 an das Kontaktrohr 9 herangezogen werden kann, um an diesem breitflächig anzuliegen und einen guten Wärmekontakt zu gewährleisten. Die breitflächige Kontaktierung wird insbesondere dadurch erreicht, daß die Krümmung der kontaktierenden Außenflächen der Kontaktstücke 14,15 an die Krümmung der Innenfläche des Kontaktrohrs 9 angepaßt ist. Dessen ungeachtet ist der Außendurchmesser der Kontaktstücke 14,15 mindestens um soviel kleiner als der Innendurchmesser des Kontaktrohrs 9, daß bei einer exzentrischen Lage der Leiterenden 10a,10b eine in gleicher Weise exzentrische Anordnung der Kontaktstücke 14,15 möglich ist.

Das kontaktierende Einklemmen des Klemmkontakts 13 zwischen den Stirnflächen der beiden Kontaktstücke 14,15 wird mit Hilfe einer Klemmschraube 17 und einer eingefügten Klemmfeder 20 erreicht. Letztere sorgt für einen ausreichenden Kontaktdruck, der jedoch den Ringsegmenten 31 des Klemmkontakts 13 eine radiale Verschiebung ermöglicht, die mit Hilfe der Zugschraube 16 ausgelöst werden kann.

Der Klemmkontakt 13 umschließt die Leiterenden 10a,10b bzw. die Verbindungsstelle 12 mit ausreichendem Abstand. Ein Hauptteil der Verbindungsstelle 12 liegt jedoch in einer axialen Aussparung 34 des ersten Kontaktstücks 14 dessen Öffnung dem Klemmkontakt 13 zugewandt ist. Das erste Kontaktstück 14 besitzt außerdem noch eine Ringnut 33, die das Einsetzen der Klemmschraube 17 erlaubt. Das Kontaktrohr 9 ist auf seinen Stirnseiten mit Halteschraubenlöchern 25 versehen. Ein beidseitig mit Halteschrauben 18 an das Kontaktrohr 9 angeschraubter Führungsring 11 dient zur Zentrierung der Kabelenden 6a, 6b. Das Kontaktrohr ist hierzu auf einer Stirnseite mit Halteschraubenlöcher 25 versehen.

Das komplett mit den übrigen Teilen der Kontakteinrichtung montierte Kontaktrohr 9 muß sich einerseits relativ leicht in den Isolierkörper 1 mit seinen Elektroden 3, 4 einschieben lassen, soll aber andererseits eine gute Kontaktierung gewährleisten. Hierzu ist das Kontaktrohr 9 mit mehreren in Führungsnuten liegenden ringförmig angeordneten Kontaktlamellen 19 versehen. Nach dem Einsetzen der Kontakteinrichtung erfolgt, wie Fig.2 zeigt, beidseitig des Isolierkörpers 1 eine Montage der Teile einer Kabelgarnitur mit einem Feldsteuerkonus 7, der in den entsprechend geformten Innenkonus 2 des Isolierkörpers 1 paßt.

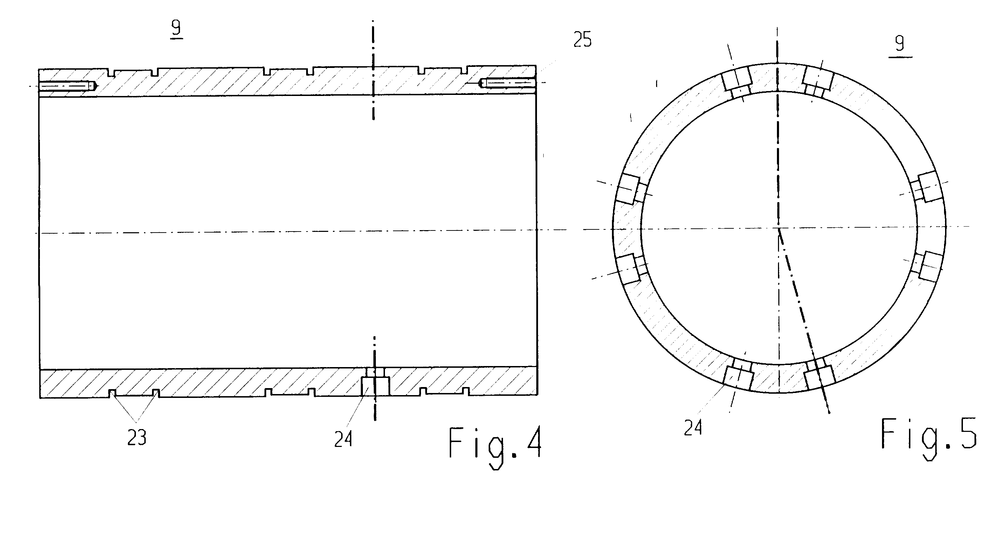

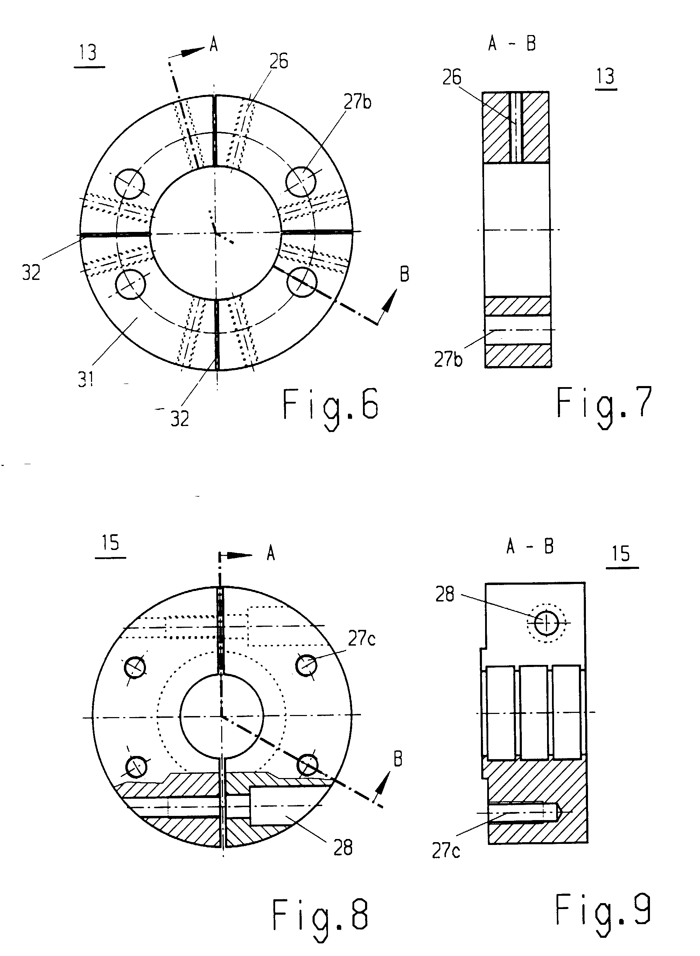

In den Fig. 4 bis 12 sind die wichtigsten Teile der Kontakteinrichtung einzeln in mehreren Ansichten dargestellt. So erkennt man in Fig. 6 und 7 die Führungsnuten 23 für die Kontaktlamellen 19 und Zugschraubenlöcher 24 für die Zugschrauben 16. Weiterhin wird in den Fig. 6 und 7 sichtbar, daß der Klemmkontakt 13 durch zwei Trennebenen 32 in vier Ringsegmente 31 unterteilt ist und jedes Ringsegment 31 eine Klemmschraubenbohrung 27b für die Klemmschraube 17 und zwei Zugschraubengewindelöcher 26 für die Zugschrauben 16 besitzt.

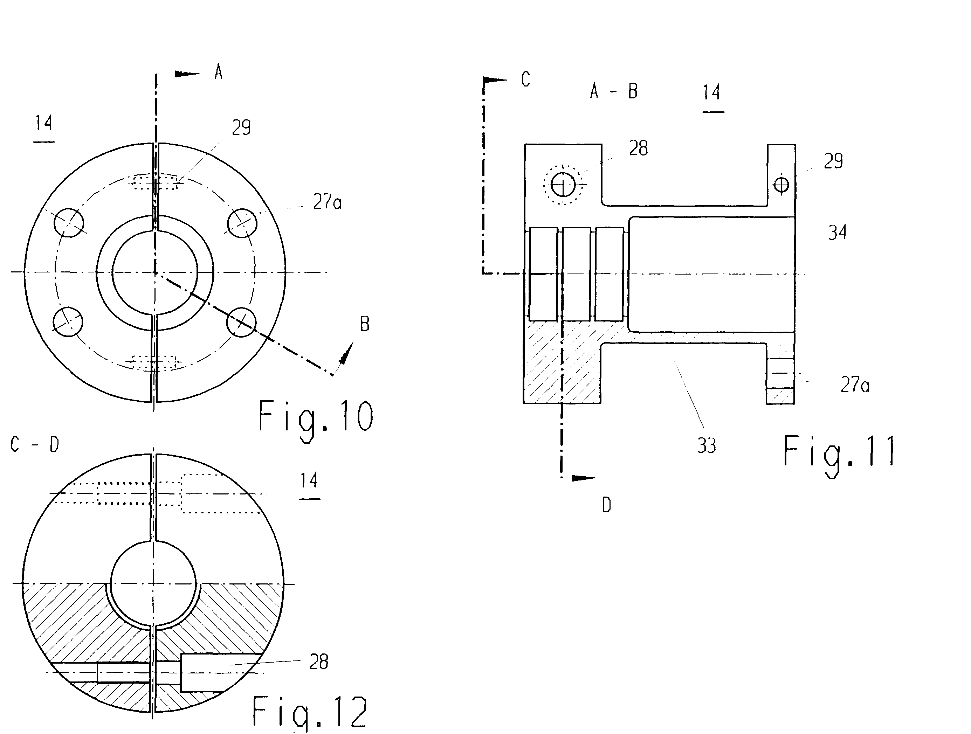

Das axial in zwei Hälften unterteilte zweite Kontaktstück 15 ist ebenfalls mit Klemmschraubenbohrungen 27c versehen und weist noch Verbindungsschraubenlöcher 28 auf. Entsprechendes gilt auch für das erste Kontaktstück 14, das in den Fig. 10 bis 12 dargestellt ist. Außer einer Klemmschraubenbohrung 27a und Verbindungsschraubenlöcher 28 besitzt es noch Kerbstiftlöcher 29, sowie die bereits erwähnte Aussparung 34 und die Ringnut 33.

### Bezugszeichenliste

Isolierkörper (1)
Innenkonus (2)
Steuerelektrode (3)
Elektrodenkern (4)
Gewindebohrungen (5)
Kabel (6)
Kabelenden (6a,6b)
Feldsteuerkonus (7)
Druckvorrichtung (8)
Kontaktrohr (9)
Leiter (10)
Leiterenden (10a,10b)
Führungsring (11)
Verbindungsstelle (12)
Klemmkontakt (13)
erstes Kontaktstück (14)
zweites Kontaktstück (15)
Zugschraube (16)
Klemmschraube (17)
Halteschraube (18)
Kontaktlamelle (19)
Klemmfeder (20)
Verbindungsschraube (21)
Ringstege (22)
Führungsnuten (23)
Zugschraubenloch (24)
Halteschraubenloch (25)
Zugschraubengewindeloch (26)
Klemmschraubenbohrung (27)
Verbindungsschraubenloch (28)
Kerbstiftloch (29)
Kabelmantelflächen (30a,30b)
Ringsegmente (31)
Trennebenen (32)
Ringnut (33)
Aussparung (34)

## Patentansprüche

1. Vorrichtung zur Verbindung zweier Kabelenden (6a,6b), bestehend aus Kontaktelementen (9,13-15), die in einen Isolierkörper (1) einsetzbar sind und zur Kontaktierung miteinander verbundener, zu den Kabelenden (6a,6b) gehöriger abisolierter Leiterenden (10a,10b) dienen, wobei ein in den Isolierkörper (1) einsetzbares Kontaktrohr (9) so konzipiert ist, daß jedes der beiden Kabelenden (6a, 6b), ohne Berücksichtigung einer ggf. bestehenden exzentrischen Lage seines Leiters (10a, 10b) zur äußeren Kabelmantelfläche (30a, 30b), mit dieser koaxial zum gemeinsamen Kontaktrohr (9) liegend, fixierbar ist, wobei die beiden Leiterenden (10a, 10b) in dieser Lage eine Verbindungsstelle (12) bilden könnten, dadurch gekennzeichnet, daß innerhalb des Kontaktrohres (9) mindestens je ein jedes der beiden Leiterenden (10a, 10b) zu umfassen vermögendes Kontaktstück (14, 15) angeordnet ist, wobei die Kontaktstücke (14, 15) über mindestens einen Klemmkontakt (13) radial verschiebbar, aber thermisch und elektrisch leitend miteinander verbunden sind, wobei der Klemmkontakt (13) mindestens in einem Teilbereich am Kontaktrohr (9) mit einem an dessen Innendurchmesser angepaßten Außendurchmesser anliegt, wobei eine elektrische und thermische Kontaktierung zwischen den Leiterenden (10a, 10b) und dem Kontaktrohr (9) realisierbar ist.

2. Vorrichtung nach Anspruch 1, dadurch gekennzeichnet, daß die Kontaktstücke (14, 15) die Leiterenden (10a, 10b) im Preßsitz umschließen.

3. Vorrichtung nach Anspruch 1 oder 2, dadurch gekennzeichnet, daß der Klemmkontakt (13) aus mindestens zwei Ringsegmenten (31), vorzugsweise aus vier Ringsegmenten, besteht, deren Trennebenen (32) axial zur Kabelachse verlaufen, und jedes der Ringsegmente (31) mit einer Zugschraube (16) am Kontaktrohr (9) befestigt ist.

4. Vorrichtung nach Anspruch 3, dadurch gekennzeichnet, daß mindestens eines der Kontaktstücke (14,15) mittels Klemmschrauben (17) und Klemmfedern (20) an die Ringsegmente (31) des Klemmkontakts (13) gepreßt ist.

5. Vorrichtung nach Anspruch 4, dadurch gekennzeichnet, daß zwischen erstem Kontaktstück (14) und zweitem Kontaktstück (15) der Klemmkontakt (13) mit Hilfe der Klemmschrauben (17) und der Klemmfedern (20) so fest eingeklemmt ist, daß eine radiale Verschiebung seiner Ringsegmente (31) durch Drehung der Zugschrauben (16) möglich ist.

6. Vorrichtung nach Anspruch 5, dadurch gekennzeichnet, daß der größte Außendurchmesser beider Kontaktstücke (14, 15) um mindestens soviel kleiner als der Innendurchmesser des Kontaktrohrs (9) bemessen ist, daß sie sich an mögliche exzentrische Lagen der Leiterenden (10a, 10b) anpassen können.

7. Vorrichtung nach einem der vorhergehenden Ansprüche 5 oder 6, dadurch gekennzeichnet, daß das erste Kontaktstück (14) entlang seiner Mantelfläche eine Ringnut (33) aufweist, die groß genug ist, um über sie das Einsetzen der Klemmschraube (17) in eine zugehörige Klemmschraubenbohrung (27) zu ermöglichen.

8. Vorrichtung nach einem der vorhergehenden Ansprüche 5 bis 7, dadurch gekennzeichnet, daß die Kontaktstücke (14,15) axial geteilt sind und entlang ihrer inneren, die Leiterenden (10a,10b) kontaktierenden Mantelfläche kontaktgebende Ringstege (22) aufweisen.

9. Vorrichtung nach einem der vorhergehenden Ansprüche 5 bis 8, dadurch gekennzeichnet, daß das erste Kontaktstück (14) zentrisch zu seiner Achse eine zylindrische Aussparung (34) besitzt, die mit ihrer Öffnung zum zweiten Kontaktstück (15) weist und eine Aufnahme der Verbindungsstelle (12) erlaubt.

10. Vorrichtung nach einem der vorhergehenden Ansprüche, dadurch gekennzeichnet, daß das Kontaktrohr (9) im Bereich seiner Mantelfläche Führungsnuten (23) aufweist, die zur Fixierung von Kontaktlamellen (19) dienen.

11. Vorrichtung nach Anspruch 10, dadurch gekennzeichnet, daß das Kontaktrohr (9) mit seinen Kontaktlamellen (19) eine vom Isolierkörper (1) umschlossene metallische Hülse oder Elektrode (3,4) kontaktiert.

12. Verfahren zur Herstellung einer Kabelverbindung bei dem eine Vorrichtung nach einem der vorhergehenden Ansprüche zur Anwendung kommt und bei dem zunächst alle zur Vorrichtung gehörigen, unzerlegbaren und damit nach der Kabelverbindung nicht mehr einsetzbaren Teile in der für die Montage erforderlichen Reihenfolge auf die jeweiligen, entsprechend vorbereiteten Kabelenden (6a,6b) aufgeschoben werden, dadurch gekennzeichnet, daß anschließend die beiden Kabelenden (6a,6b), ohne Rücksicht auf eine exzentrische Lage ihrer beiden abisolierten Leiterenden (10a,10b) zur jeweiligen äußeren Kabelmantelfläche, mit Hilfe einer Montagevorrichtung so ausgerichtet werden, daß ihre äußeren Kabelmantelflächen (30a,30b) konzentrisch zu einer gemeinsamen Mittelachse zu liegen kommen, daß dann die beiden abisolierten Leiterenden (10a,10b) in dieser Stellung miteinander verbunden, vorzugsweise verschweißt, werden und daß anschließend die Gesamtmontage der Vorrichtung erfolgt.

## Claims

1. Device for connecting two cable ends (6a, 6b), consisting of contact elements (9, 13-15) which can be inserted into an insulating body (1) and serve the contacting of stripped conductor ends (10a, 10b) which are connected to one another and belong to the cable ends (6a, 6b), a contact tube (9) which can be inserted into the insulating body (1) being conceived in such a way that each of the two cable ends (6a, 6b), without allowance being made for any eccentric position of its conductor (10a, 10b) relative to the outer cable-sheath surface (30a, 30b), can be fixed so as to lie with the latter coaxially to the common contact tube (9), in which case the two conductor ends (10a, 10b) could form a joint (12) in this position, characterized in that at least one contact piece (14, 15) each, which is able to enclose each of the two conductor ends (10a, 10b), is arranged inside the contact tube (9), the contact pieces (14, 15) being radially displaceable via at least one binding contact (13) but being connected to one another in a thermally and electrically conductive manner, the binding contact (13) bearing at least in a sectional area against the contact tube (9) with an outside diameter adapted to the inside diameter of the latter, in which case electrical and thermal contacting between the conductor ends (10a, 10b) and the contact tube (9) can be realized.

2. Device according to Claim 1, characterized in that the contact pieces (14, 15) enclose the conductor ends (10a, 10b) in the interference fit.

3. Device according to Claim 1 or 2, characterized in that the binding contact (13) consists of at least two annular segments (31), preferably of four annular segments, the parting planes (32) of which run axially relative to the cable axis, and each of the annular segments (31) is fastened to the contact tube (9) by a draw-in screw (16).

4. Device according to Claim 3, characterized in that at least one of the contact pieces (14, 15) is pressed against the annular segments (31) of the binding contact (13) by means of binding screws (17) and binding springs (20).

5. Device according to Claim 4, characterized in that the binding contact (13) is firmly clamped in place between the first contact piece (14) and the second contact piece (15) by means of the binding screws (17) and the binding springs (20) in such a way that radial displacement of its annular segments (31) is possible by turning the draw-in screws (16).

6. Device according to Claim 5, characterized in that the largest outside diameter of both contact pieces (14, 15) is dimensioned to be at least so much smaller than the inside diameter of the contact tube (9) that they can adapt themselves to possible eccentric positions of the conductor ends (10a, 10b).

7. Device according to either of the preceding Claims 5 or 6, characterized in that the first contact piece (14) has an annular groove (33) along its lateral surface, which annular groove (33) is large enough to enable the binding screw (17) to be inserted via it into an associated binding-screw bore (27).

8. Device according to one of the preceding Claims 5 to 7, characterized in that the contact pieces (14, 15) are split axially and have contact-making annular webs (22) along their inner lateral surface contacting the conductor ends (10a, 10b).

9. Device according to one of the preceding Claims 5 to 8, characterized in that the first contact piece (14) has a cylindrical recess (34) in a concentric position relative to its axis, which recess (34) points with its opening towards the second contact piece (15) and allows the joint (12) to be accommodated.

10. Device according to one of the preceding claims, characterized in that the contact tube (9) has guide grooves (23) in the region of its lateral surface, which guide grooves (23) serve to fix contact laminations (19).

11. Device according to Claim 10, characterized in that the contact tube (9), by means of its contact laminations (19), contacts a metallic case or electrode (3, 4) enclosed by the insulating body (1).

12. Method of making a cable connection, in which a device according to one of the preceding claims is used and in which all of the parts which belong to the device, are indivisible and thus can no longer be inserted after the cable is connected are first of all slipped onto the respective, appropriately prepared cable ends (6a, 6b) in the sequence required for the assembly, characterized in that the two cable ends (6a, 6b), without making allowance for an eccentric position of their two stripped conductor ends (10a, 10b) relative to the respective outer cable-sheath surface, are then oriented by means of an assembly device in such a way that their outer cable-sheath surfaces (30a, 30b) come to lie concentrically to a common centre axis, in that the two stripped conductor ends (10a, 10b) are then connected, preferably welded, to one another in this position, and in that complete assembly of the device is then effected.

## Revendications

1. Dispositif pour relier deux extrémités de câbles (6a, 6b) comprenant des éléments de contact (9, 13-15) qui peuvent être logés dans un corps isolant (1) et servent à réaliser le contact entre des extrémités de conducteurs (10a, 10b) dénudées, liées l'une à l'autre, des extrémités de câbles (6a, 6b), un tube de contact (9) placé dans le corps isolant (1) étant agencé de telle sorte que chacune des deux extrémités de câbles (6a, 6b), sans tenir compte de la position éventuellement excentrée de son conducteur (10a, 10b) par rapport à la surface périphérique extérieure du câble (30a, 30b), puisse être fixée avec ladite surface périphérique extérieure coaxiale avec le tube de contact (9) commun, les deux extrémités de conducteurs (10a, 10b) pouvant former dans cette position un point de connexion (12), caractérisé par le fait que des pièces de contact (14, 15) au nombre d'au moins une chaque fois qui entourent chacune des deux extrémités de conducteur (10a, 10b) sont disposées à l'intérieur du tube de contact (9), les pièces de contact (14, 15) pouvant être déplacées radialement grâce à au moins un contact à serrage (13) mais étant liées l'une à l'autre de manière thermiquement et électriquement conductrice, le contact à serrage (13) étant en appui sur le tube de contact (9) au moins dans une zone partielle avec un diamètre extérieur adapté au diamètre intérieur du tube de contact, un contact thermique et électrique entre les extrémités de conducteurs (10a, 10b) et le tube de contact (9) étant réalisé.

2. Dispositif selon la revendication 1, caractérisé par le fait que les pièces de contact (14, 15) entourent les extrémités de conducteurs (10a, 10b) en formant un assemblage serré.

3. Dispositif selon la revendication 1 ou 2, caractérisé par le fait que le contact à serrage (13) est formé d'au moins deux segments d'anneau (31), de préférence de quatre segments d'anneau, dont les plans de séparation (32) s'étendent axialement par rapport à l'axe du câble et que chacun des segments d'anneau (31) est fixé au tube de contact (9) au moyen d'une vis de traction (16).

4. Dispositif selon la revendication 3, caractérisé par le fait qu'au moins une des pièces de contact (14, 15) est pressée contre les segments d'anneaux (31) du contact à serrage (13) par des vis de serrage (17) et des ressorts de serrage (20).

5. Dispositif selon la revendication 4, caractérisé par le fait qu'entre la première pièce de contact (14) et la deuxième pièce de contact (15), le contact à serrage (13) est bridé à l'aide des vis de serrage (17) et des ressorts de serrage (20) de manière telle qu'un déplacement radial de ses segments d'anneau (31) soit possible par rotation des vis de traction (16).

6. Dispositif selon la revendication 5, caractérisé par le fait que le diamètre extérieur maximal des deux pièces de contact (14, 15) est inférieur au diamètre intérieur du tube de contact (9) d'au moins une valeur qui leur permette de s'adapter à des excentricités possibles des extrémités de conducteurs (10a, 10b).

7. Dispositif selon une des revendications 5 ou 6 précédentes, caractérisé par le fait que la première pièce de contact (14) présente, le long de sa surface périphérique, une gorge annulaire (33) qui est suffisamment large pour permettre la mise en place de la vis de serrage (17) dans un trou (27) correspondant.

8. Dispositif selon une des revendications 5 à 7 précédentes, caractérisé par le fait que les pièces de contact (14, 15) sont séparées dans la direction axiale et présentent des nervures annulaires (22) de contact le long de leur surface périphérique intérieure assurant le contact avec les extrémités de conducteurs (10a, 10b).

9. Dispositif selon une des revendications 5 à 8 précédentes, caractérisé par le fait que la première pièce de contact (14) présente un évidement cylindrique (34) centré par rapport à son axe, dont l'ouverture est tournée vers la deuxième pièce de contact (15) et permet de loger le point de liaison (12).

10. Dispositif selon une des revendications précédentes, caractérisé par le fait que le tube de contact (9), dans la région de sa surface périphérique, présente des rainures de guidage (23) qui servent à retenir des lamelles de contact (19).

11. Dispositif selon la revendication 10, caractérisé par le fait que le tube de contact (9) avec ses lamelles de contact (19) établit le contact avec une douille métallique ou une électrode (3, 4) qui est entourée par le corps isolant (1).

12. Procédé de réalisation d'une connexion de câbles dans lequel on utilise un dispositif selon une des revendications précédentes et dans lequel tout d'abord on enfile sur les extrémités de câbles (6a, 6b) concernées, préparées en conséquence, dans l'ordre exigé pour le montage, tous les éléments non démontables du dispositif qui ne pourront plus être montés par la suite, caractérisé par le fait qu'ensuite, sans tenir compte d'une position excentrée de leurs deux extrémités de conducteurs (10a, 10b) dénudées par rapport à la surface extérieure concernée du câble, on aligne les deux extrémités de câbles (6a, 6b) à l'aide d'un dispositif de montage, de telle sorte que leurs surfaces périphériques extérieures (30a, 30b) soient concentriques avec un axe médian commun, qu'ensuite on relie l'une à l'autre dans cette position les deux extrémités de conducteur (10a, 10b) dénudées, de préférence on les soude, et qu'ensuite on effectue le montage du dispositif complet.
